# EUROPEAN PATENT APPLICATION

(11) **EP 3 486 015 A1**
(43) Date of publication of application: **22.05.2019**
(21) Application number: 18206837.9
(22) Date of filing: 16.11.2018
(51) Int. Cl.: B23D 47/04, B27B 5/22, B23D 45/06, B27B 25/02

(54) **CUTTING APPARATUS**

(30) Priority: 17.11.2017 US 201715816757
(71) Applicant: TTI (Macao Commercial Offshore) Limited, Macao (MO)
(72) Inventor: Van Bergen, Jonathan R., Easley, SC South Carolina 29642 (US)
(74) Representative: Stevenson-Hill, Jack Patrick

(57) **Abstract**

A cutting apparatus (10) for cutting a workpiece, the cutting apparatus (10) including a first housing portion (14) and a second housing portion (18), a saw (22) supported by the first housing portion (14), and a feed mechanism (26) supported by the second housing portion (18). The cutting apparatus (10) includes a height adjustment mechanism (30) for adjusting a distance between the first housing portion (14) and the second housing portion (18) whereby the height adjustment mechanism (30) positions the feed mechanism (26) relative to the first housing portion (14). The feed mechanism (26) is operable to move the workpiece through the apparatus (10) to be cut by the saw (22).

## Description

### FIELD OF THE INVENTION

The present invention relates to a cutting apparatus for cutting a workpiece, and more specifically to using an adjustable feed mechanism to feed the workpiece through the cutting apparatus.

### BACKGROUND OF THE INVENTION

There are various cutting devices known in the art for cutting a workpiece. Typically, these cutting devices require a user to manually feed the workpiece through the device to be cut.

### SUMMARY OF THE INVENTION

The invention provides a cutting apparatus for cutting a workpiece, the cutting apparatus including a first housing portion and a second housing portion, a saw supported by the first housing portion, and a feed mechanism supported by the second housing portion. The cutting apparatus includes a height adjustment mechanism for adjusting a distance between the first housing portion and the second housing portion whereby the height adjustment mechanism positions the feed mechanism relative to the first housing portion. The feed mechanism is operable to move the workpiece through the apparatus to be cut by the saw.

The feed mechanism may include a motor, a drive system coupled to the motor, and rollers driven by the drive system for feeding the workpiece through the apparatus.

The rollers may be positioned on a rod supported by the second housing portion. The rod may be coupled to an output of the motor via at least one pulley for rotation of the rollers on the workpiece.

The height adjustment mechanism may be operable to adjust the distance between the first and second housing portions, thereby positioning the rollers on the workpiece such that the rollers provide a driving force to the workpiece.

The cutting apparatus may further comprise a table positioned between the first housing portion and the second housing portion. A cutting blade of the saw may extend through an opening defined by the table.

The height adjustment mechanism may include at least one threaded bar positioned on the second housing portion. Rotational movement of the at least one threaded bar may move the second housing portion relative to the table.

The height adjustment mechanism may include a handle coupled to the threaded bar. The handle may be rotated to move the second housing portion.

The second housing portion may include at least one post. The at least one post may be slidably coupled to and supported on the first housing portion for linear movement.

The cutting apparatus may further comprise at least one fence positioned on the first housing portion. The at least one fence may be movable relative to the saw to define a cutting width of the apparatus.

The at least one fence may include a sliding block positioned within a track of the first housing portion, the sliding block movable along the track for adjusting the cutting width.

The at least one fence may include a cam lock for fixing the at least one fence at the cutting width.

The cutting apparatus may further comprise a width adjustment mechanism including a first fence and a second fence that define a cutting width, the second fence including at least one side including fingers extending at an angle relative to a direction of travel of the workpiece.

The cutting apparatus may further comprise a direction of travel defined by the movement of the workpiece from a first end of the apparatus to a second end opposite the first end. The feed mechanism may be operable to move the workpiece along the direction of travel.

The feed mechanism may include a motor for driving the feed mechanism and the saw includes a motor for driving the saw. At least the motor of the feed mechanism may include a variable speed motor.

The cutting apparatus may further comprise a single actuator operatively coupled to the saw motor and the motor of the feed mechanism for operating the saw and the feed mechanism together.

The invention provides, in another aspect, a cutting apparatus for cutting a workpiece, the cutting apparatus including a first housing portion and a second housing portion, a table supported by the first housing portion, and a cutting blade positioned within the first housing portion, wherein the cutting blade extends through an opening defined by the table. The cutting apparatus includes a feed mechanism supported by the second housing portion. The feed mechanism includes a motor, a drive system coupled to the motor, and rollers driven by the drive system. The feed mechanism is operable to move the workpiece through the apparatus to be cut by the cutting blade.

The feed mechanism may include a rod supported by the second housing portion. The rollers may be positioned on the rod. The rod may be coupled to an output of the motor via at least one pulley for rotation of the rollers on the workpiece.

The cutting apparatus may further comprise a width adjustment mechanism including at least one fence positioned on the table. The at least one fence may be movable relative to the cutting blade for adjusting a cutting width of the apparatus.

The invention provides, in yet another aspect, a cutting apparatus for cutting a workpiece, the cutting apparatus including a first housing portion and a second housing portion. The second housing portion is spaced apart from the first housing portion to define a gap therebetween, the gap having a distance. The cutting apparatus includes a table supported by the first housing portion and a cutting blade positioned within the first housing portion, wherein a portion of the cutting blade extends through an opening defined by the table and is positioned in the gap. The cutting apparatus further includes a feed mechanism supported by the second housing portion. The feed mechanism includes a motor, a drive system coupled to the motor, and rollers driven by the drive system. A height adjustment mechanism is included for adjusting the distance between the first housing portion and the second housing portion. The height adjustment mechanism is adjustable to a thickness of the workpiece positioned on the table. The feed mechanism is operable to move the workpiece through the apparatus to be cut by the cutting blade.

The height adjustment mechanism may be operable to adjust the distance of the gap to any thickness of the workpiece and position the rollers on the workpiece such that the rollers provide a driving force to the workpiece for movement through the apparatus.

Any of the optional features described above in relation to one aspect of the present invention may, where appropriate, be applied to any other aspect of the invention.

Other aspects of the invention will become apparent by consideration of the detailed description and accompanying drawings.

### BRIEF DESCRIPTION OF THE DRAWINGS

FIG. 1 is a perspective view of a cutting apparatus according to one embodiment of the invention.
FIG. 2 is a front view of the cutting apparatus of FIG. 1.
FIG. 3 is a top view of the cutting apparatus of FIG. 1.
FIG. 4 is a side view of the cutting apparatus of FIG. 1.
FIG. 5 is a bottom perspective view of the cutting apparatus of FIG. 1
FIG. 6 is another perspective view of the cutting apparatus with portions removed to show a feeding mechanism.
FIG. 7 is an enlarged, partial perspective view of the feeding mechanism of FIG. 6.
FIG. 8 is a partial side perspective view of the feeding mechanism.
FIG. 9 is another bottom perspective view of the cutting apparatus including a cutting blade.

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways. Also, it is to be understood that the phraseology and terminology used herein is for the purpose of description and should not be regarded as limiting.

### DETAILED DESCRIPTION

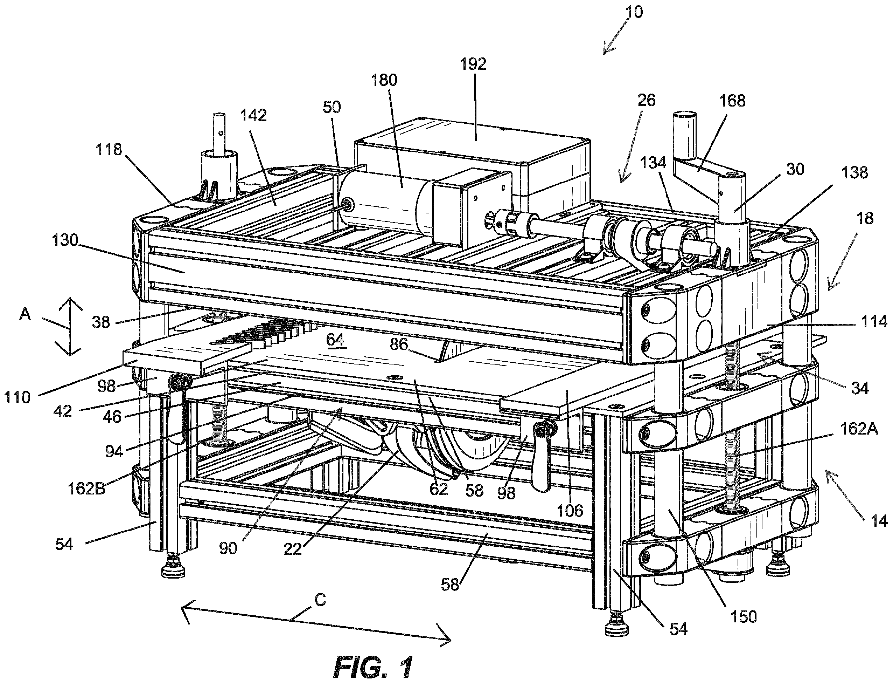

FIGS. 1-9 illustrate a cutting apparatus 10 for cutting (e.g., rip cutting, cross-cutting, etc.) a workpiece (not shown). The cutting apparatus 10 includes a first housing portion 14 and a second housing portion 18 positioned above the first housing portion 14. A saw 22 is supported by the first housing portion 14. A feed mechanism 26 is supported by the second housing portion 18. The cutting apparatus 10 further includes a height adjustment mechanism 30 for positioning the feed mechanism 26 relative to the first housing portion 14. The feed mechanism 26 is operable to move the workpiece through the cutting apparatus 10 to be cut by the saw 22.

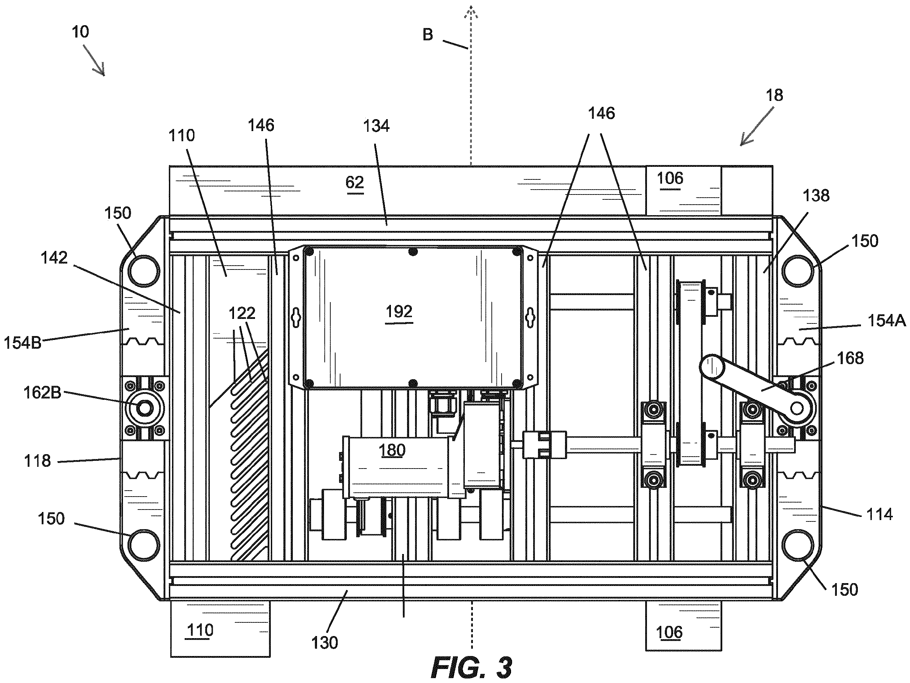

With reference to FIGS. 1 and 3-4, the second housing portion 18 is spaced apart from the first housing portion 14 to define a gap 34 therebetween. The gap 34 is configured to receive the workpiece such that the workpiece is located between the first housing portion 14 and the second housing portion 18. Specifically, the gap 34 has a distance A defined by a bottom surface 38 of the second housing portion 18 relative to a top surface 42 of the first housing portion 14. The cutting apparatus 10 includes a first end 46 and a second end 50 opposite the first end 46. In addition, the cutting apparatus 10 is configured to move the workpiece from the first, feed end 46 to the second, outlet end 50 within the gap 34. The movement of the workpiece defines a direction of travel B (FIG. 3).

With reference to FIGS. 1-4, the first housing portion 14 includes legs 54 and a support member 58 extending between adjacent legs 54. In the illustrated embodiment, the cutting apparatus includes four legs 54 and four support members 58. The first housing portion 14 further includes a table 62 supported by the legs 54 and the support members 58. The table 62 defines the top surface 42 of the first housing portion 14 and is positioned proximate the gap 34. In addition, the table 62 is configured to provide a work surface 64 on which the workpiece moves.

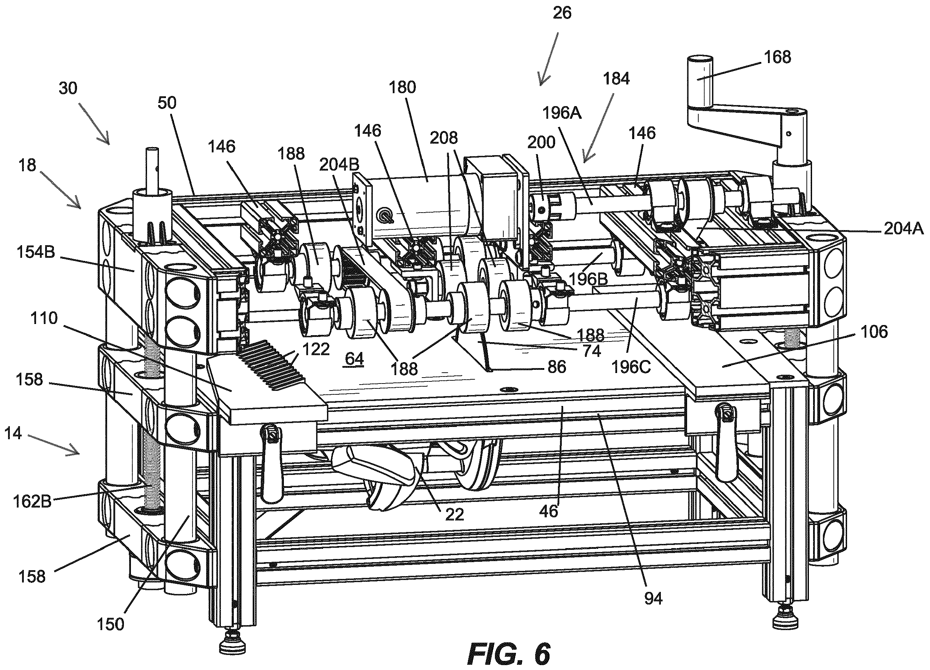

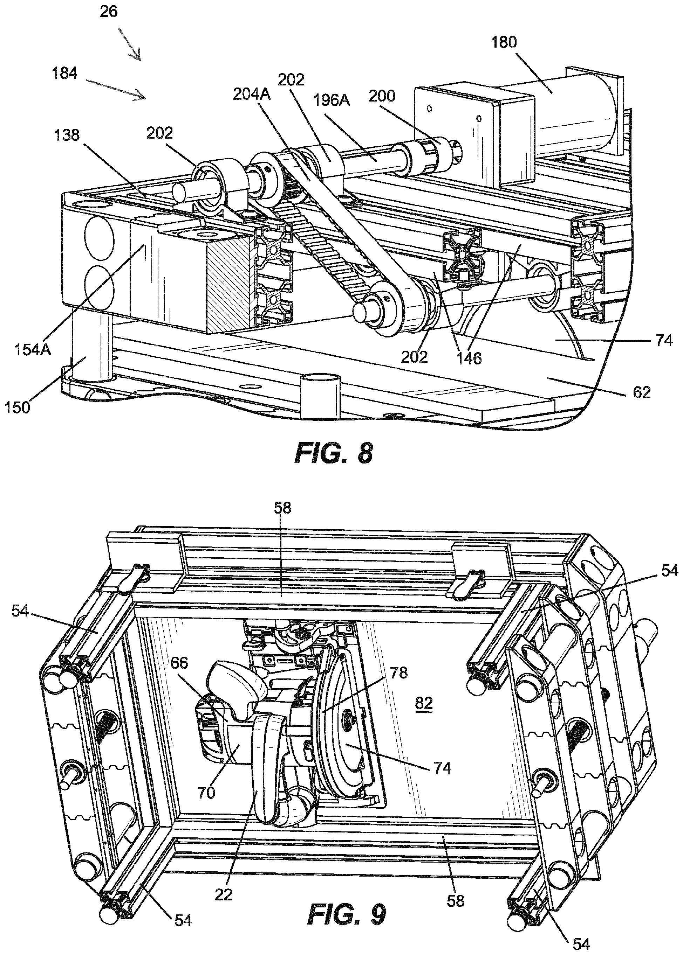

With reference to FIGS. 1, 6, and 9, the saw 22 includes a housing 66, a motor 70, a cutting blade 74 operatively coupled to the motor 70, and a guard 78 positioned about a portion of the cutting blade 74 (FIG. 9). The illustrated saw 22 is positioned on a lower surface 82 opposite the work surface 64 of the table 62 such that the saw 22 is positioned within the first housing portion 14. The housing 66 of the saw 22 is coupled to the table 62 using fastening elements (e.g., screws, bolts, etc.) (not shown). The table 62 defines an opening 86 (FIG. 6) positioned generally at a center of the table 62. The opening 86 forms a single slot extending through the table 62 from the work surface 64 to the lower surface 82. Specifically, the opening 86 is configured to receive the cutting blade 74 of the saw 22. In other embodiments, the saw 22 may be supported by other features of the first housing portion 14 such as the legs 54 or the support members 58 positioned proximate the table 62 such that the cutting blade 74 passes through the opening 86. The motor 70 of the saw 22 is operable to rotate the cutting blade 74 for cutting the workpiece. The illustrated saw 22 is configured to receive power from an AC power supply (not shown) to power the motor 70. Conversely, the saw 22 may be powered by a DC power supply such as a battery pack. The motor 70 may also operate at a plurality of speeds such that the motor 70 is a variable speed motor.

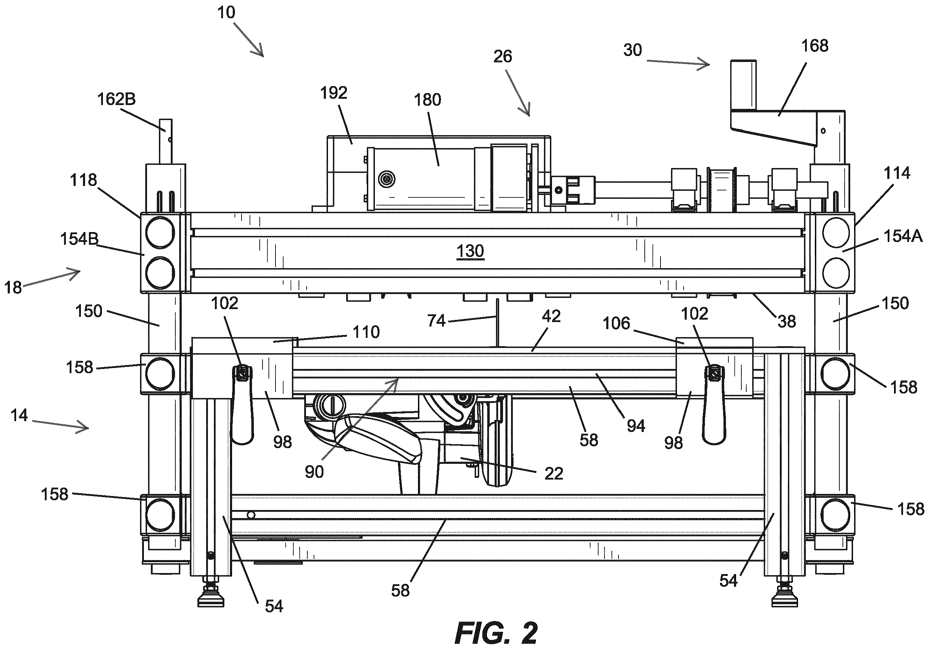

With reference to FIGS. 1-4 and 6, the cutting apparatus 10 includes a width adjustment mechanism 90 positioned on the first housing portion 14. The width adjustment mechanism 90 includes fences 106, 110 positioned on the table 62. Each fence 106, 110 extends from the first end 46 to the second end 50 of the apparatus 10, and are movable relative to the saw 22 to define a cutting width C of the apparatus 10. In the illustrated embodiment, the support member 58 positioned at the first end 46 of the table 62 includes a track 94. Each fence 106, 110 moves along the support member 58 using a sliding block 98 that is positioned within the track 94. That is, each fence 106, 110 is coupled to one of the sliding blocks 98, and are movable relative to one another to vary the cutting width C depending on the size of the workpiece. In other embodiments, the fences 106, 110 are slidable in a track 94 formed at the second end 90 of the first housing portion 14, or within tracks 94 formed at both ends 46, 50 for adjusting the cutting width C. Each fence 106, 110 may be movable relative to the other and/or to the cutting blade 74. Furthermore, in the illustrated embodiment, the cutting apparatus 10 is configured to cut the workpiece to the cutting width C of about 12 inches or less. In other embodiments, the cutting width C may be more than 12 inches. Each sliding block 98 includes a locking element, such as a cam lock 102 (FIG. 2), for fixing the respective fence 106, 110 at the selected cutting width C.

With continued reference to FIGS. 1-4 and 6, the first fence 106 is positioned on a first side 114 of the cutting apparatus 10 and the second fence 110 is positioned on a second side 118, which is opposite the first side 114. In the illustrated embodiment, both fences 106, 110 are adjustable. In further embodiments, only one of the fences 106, 110 is movable. As such, the cutting width C is fixed by moving one or both fences 106, 110 relative to the cutting blade 74 of the saw 22. In a further embodiment, one of the support members 58 includes a measuring device (e.g., ruler) (not shown) for fixing the first fence 106 and the second fence 110 at the desired cutting width C.

With reference to FIGS. 1, 3, and 6, the second fence 110 includes fingers 122 positioned on a side of the second fence 110. The fingers 122 extend from the side at an angle relative to the direction of travel B of the workpiece. The fingers 122 form a safety device (i.e., featherboard) for inhibiting movement of the workpiece against the direction of travel B in the event of a kickback by the cutting blade 74. In other embodiments, the first fence 106 may include the fingers 122, or neither fence 106, 110 includes the fingers 122.

With reference to FIGS. 1-4, the second housing portion 18 includes first and second members 130, 134 positioned at the first and second ends 46, 50 respectively, of the cutting apparatus 10. The second housing portion 18 further includes third and fourth members 138, 142 positioned at the first and second sides 114, 118, respectively, of the cutting apparatus 10 and are substantially perpendicular to the first and second members 130, 134. Connecting members 146 (FIG. 3) extend from the first member 130 to the second member 134, and the connecting members 146 are configured to provide structure of the second housing portion 18, as further discussed below. In addition, the second housing portion 18 is supported by posts 150 (FIG. 2). The second housing portion 18 is movable relative to the first housing portion 14, as further discussed below.

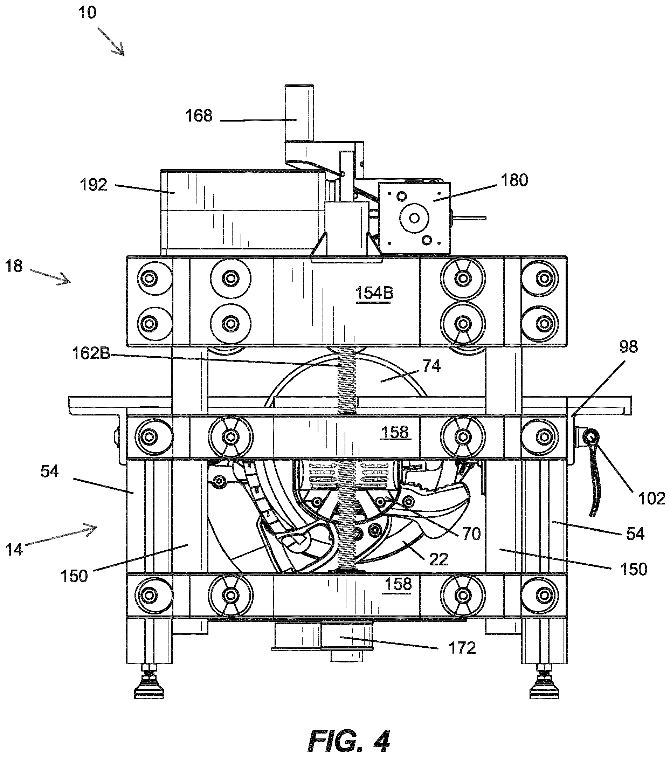

With continued reference to FIGS. 1-4, side portions 154A, 154B are positioned on and extend from the third and fourth members 138, 142 (FIG. 3). The first housing portion 14 further includes side supports 158 (FIG. 4) positioned on and extending from the support members 58 (FIG. 2). The posts 150 extend downward from the side portions 154A, 154B of the second housing portion 18 to the side supports 158 of the first housing portion 14. In the illustrated embodiment, the first housing portion 14 includes four side supports 158, two positioned at the top surface 42 of the first housing portion 14 and two positioned at a lower portion of the first housing portion 14. In other embodiments, the first housing portion 14 may include fewer or more side supports 158 positioned on the first and second sides 114, 118, respectively, of the cutting apparatus 10. The side portions 154A, 154B are coupled to the plurality of posts 150 via bushings (not shown) such that the side portions 154A, 154B and the posts 150 are configured to move linearly (i.e., slide) relative to the side supports 158 of the first housing portion 14. Specifically, the posts 150 slide within the apertures defined by the side supports 158 such that the second housing portion 18 can move while still supported by the first housing portion 14. The side supports 158 remain stationary on the first housing portion 14. In other embodiments, the side portions 154A, 154B may be slidably coupled to the posts 150 such that the posts 150 also remain stationary but the side portions 154A, 154B of the second housing portion 18 are movable relative to the first housing portion 14.

With reference to FIG. 1, the height adjustment mechanism 30 includes the side portions 154A, 154B and threaded bars 162A, 162B positioned on the second housing portion 18. Specifically, each side portion 154A, 154B includes a bearing (not shown) positioned within the respective side portion 154A, 154B. Each bar 162A, 162B extends through the side portions 154A, 154B such that the bearing is positioned on threads of the respective bar 162A, 162B. Each bar 162A, 162B rotates, and converts the rotational movement into linear movement using the bearing. In the illustrated embodiment, the height adjustment mechanism 30 includes a first threaded bar 162A and a second threaded bar 162B positioned on the first and second sides 114, 118, respectively. In addition, the first threaded bar 162A and the second threaded bar 162B extend through the side portions 154A, 154B coupled to the second housing portion 18 for moving the second housing portion 18 relative to the first housing portion 14. In other embodiments, the height adjustment mechanism may include only one threaded bar 162A, 162B.

With reference to FIGS. 1-4 and 6, a handle 168 is coupled to an end of one of the bars 162A, 162B. Specifically, the handle 168 is rotated by a user for providing the rotational movement to the respective bar 162A, 162B. The handle 168 can be rotated in a first direction and a second direction for adjusting a position of the second housing portion 18 lower or higher relative to the first housing portion 14 (FIG. 4). As such, movement of the handle 168 moves the second housing portion 18. In addition, the handle 168 is releasably coupled to the one of the first and second threaded bars 162A, 162B such that the handle 168 may be positioned on either of the first and second threaded bars 162A, 162B for providing the rotational movement.

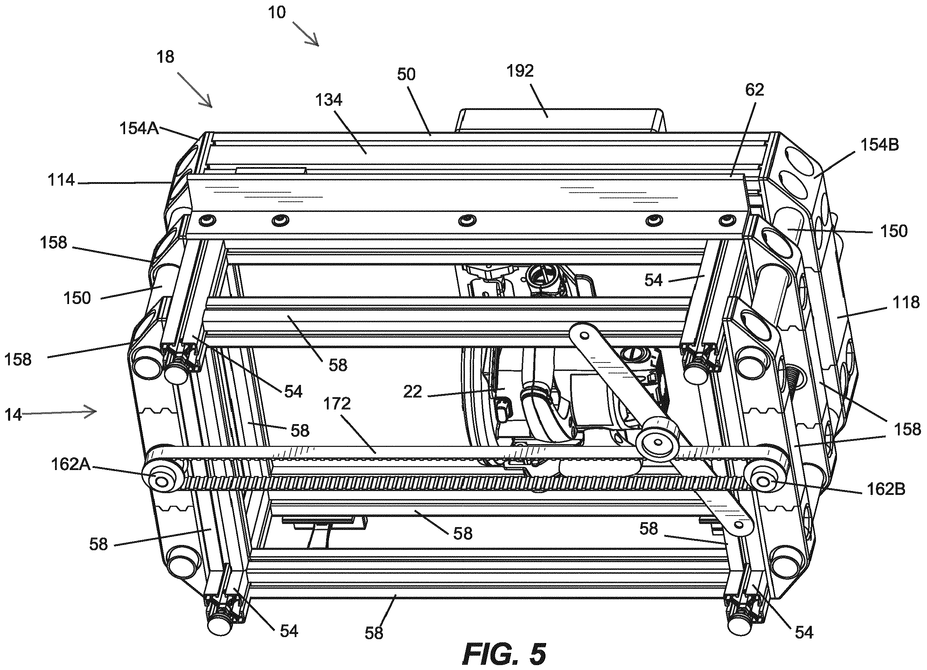

With reference to FIGS.1 and 5, the height adjustment mechanism 30 further includes a toothed belt 172 extending between the first and second bars 162A, 162B (FIG. 5). Specifically, the rotational movement of the first threaded bar 162A causes rotation of the second threaded bar 162B via the belt 172. As such, the first side 114 and the second side 118 of the second housing portion 18 move together by the rotational movement of only one of the threaded bars 162A, 162B. Other transmissions for imparting motion between the first side 114 and the two sides 114, 118 can be used in further embodiments. In addition, the belt 172 allows the first side 114 and the second side 118 of the second housing portion 18 to move simultaneously such that the second housing portion 18 remains substantially parallel to the table 62 of the first housing portion 14 during movement. Consequently, the feed mechanism 26 (FIG. 1) positioned within the second housing portion 18 may be positioned substantially level relative to the first housing portion 14, as further discussed below.

In operation, the height adjustment mechanism 30 adjusts the distance A between the first housing portion 14 and the second housing portion 18. Specifically, the user positions the handle 168 on one of the first and second threaded bars 162A, 162B and applies a rotational force in a first direction to the handle 168. The second housing portion 18 moves towards the first housing portion 14 while the handle 168 is rotated in the first direction. Conversely, the user may apply the rotational force to the handle 168 in a second direction opposite the first direction such that the second housing portion 18 moves away from the first housing portion 14. As such, the height adjustment mechanism 30 is operable to adjust the position of the feed mechanism 26 relative to the first housing portion 14.

With reference to FIGS. 1 and 6-8, the feed mechanism 26 includes a motor 180, a drive system 184 (FIG. 6) coupled to the motor 180, and rollers 188 driven by the drive system 184. In the illustrated embodiment, a portion of the drive system 184 and the rollers 188 are positioned below the connecting members 146 of the second housing portion 18, and a portion of the drive system 184 and the motor 180 are positioned above the connecting members 146. The motor 180 may be further electrically coupled to an electrical box 192 (FIG. 1) for controlling the speed of the motor 180 such that the motor 180 of the feed mechanism 26 is a variable speed motor. The motor 180 of the feed mechanism 26 is configured to receive power from an AC power supply (not shown) to power the motor 180. Conversely, the feed mechanism may be powered by a DC power supply such as a battery pack. The drive system 184 further includes rods 196A, 196B, 196C (FIG. 6). An output 200 of the motor 180 is coupled to at least one of the rods 196A, 196B, 196C for providing a driving force of the cutting apparatus 10.

The rods 196A, 196B, 196C are supported by the third and fourth members 154A, 154B and the connecting members 146 (FIGS. 6 and 8). Specifically, the rods 196A, 196B, 196C are coupled to the connecting members 146 via bearings 202 such that the rods 196A, 196B, 196C are rotatable relative to the second housing portion 18. In the illustrated embodiment, the first rod 196A is positioned above the connecting members 146 and coupled to the output 200 of the motor 180 (FIG. 6). Second and third rods 196B, 196C are positioned below the connecting members 146. The second rod 196B is co-rotatably coupled to the first rod 196A via a first pulley 204A. The second rod 196B is further co-rotatably coupled to the third rod 196C via a second pulley 204B. The first and second pulleys 204A, 204B transfer the rotational output 200 of the motor 180 to the second and third rods 196B, 196C positioned adjacent the gap 34.

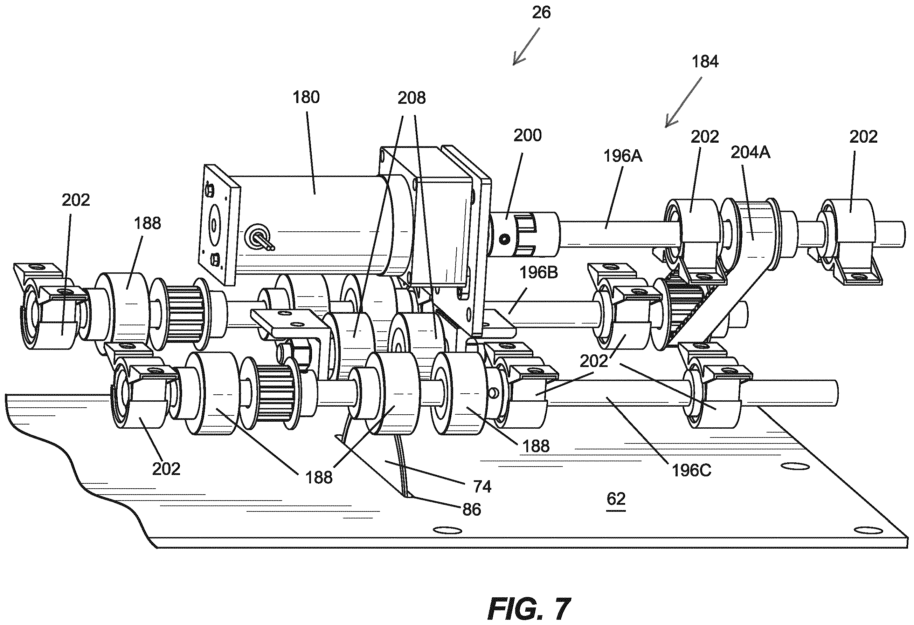

With reference to FIG.7, the rollers 188 are positioned on the second and third rods 196B, 196C. Specifically, the rollers 188 are generally positioned above the table 62 and within the second housing portion 18. The rollers 188 rotate with the rods 196A, 196B, 196C. In addition, the rollers 188 are positioned on the workpiece such that rollers 188 provide the driving force to the workpiece. In other words, the rollers 188 are driven by the drive system 184 for feeding the workpiece through the apparatus 10. In the illustrated embodiment, three rollers 188 are positioned on each of the second rod 196B and the third rod 196C for driving the workpiece from the first end 46 to the second end 50 of the cutting apparatus 10. As such, the feed mechanism 26 is operable to move the workpiece through the apparatus 10 using the driving force from the rollers 188. In other embodiments, the feed mechanism 26 may include fewer or more rollers 188 and rods 196A, 196B, 196C for feeding the workpiece through the apparatus 10.

With continued reference to FIG. 7, the feed mechanism 26 further includes support rollers 208 positioned between the second and third rods 196B, 196C and supported by one of the connecting members 146. The support rollers 208 rotate with the movement of the workpiece through the apparatus 10. In the illustrated embodiment, the support rollers 208 are not driven by the motor 180 and the drive system 184.

With reference to FIG. 1, the rollers 188, 208 are positioned on the workpiece using the height adjustment mechanism 30. Specifically, the height adjustment mechanism 30 is operable to adjust the distance A of the gap 34 by moving the second housing portion 18 relative to the first housing portion 14. The workpiece is positioned on the table 62 of the first housing portion 14 such that the height adjustment mechanism 30 is operable to position the rollers 188, 208 of the feed mechanism 26 on the workpiece by moving the second housing portion 18. As such, the height adjustment mechanism 30 is adjustable to a thickness of the workpiece. In other words, the height adjustment mechanism 30 is operable to adjust the distance A of the gap 34 to any thickness of the workpiece.

With reference to FIGS. 1 and 9, the saw motor 70 and the motor 180 of the feed mechanism 26 are separate. In addition, each motor 70, 180 may include a switch for supplying power to the respective motor 70, 180. The switches may be coupled together using a single actuator (not shown) for operating the saw 22 and the feed mechanism 26 together. The power supplied to the cutting apparatus 10 (i.e., the saw motor 70, the motor 180 of the feed mechanism 26, etc.) is from a single AC power source (not shown). In other embodiments, the cutting apparatus 10 may be supplied by DC power. The cutting apparatus 10 may further include a vacuum hose (not shown) positioned within the first or second housing portions 14, 18 for removing dust while the workpiece is being cut.

In operation, the user positions the workpiece on the table 62 and adjusts at least one of the first fence 106 and the second fence 110 to the predetermined cutting width C using the width adjustment mechanism 90. The user then rotates the handle 168 of the height adjustment mechanism 30 in at least one of the first direction and the second direction to move the second housing portion 18 relative to the first housing portion 14. Movement of the second housing portion 18 positions the rollers 188, 208 on the workpiece. Subsequently, the user activates the saw motor 70 and the motor 180 of the feed mechanism 26 to begin a cutting operation of the cutting apparatus 10.

The feed mechanism 26 applies the driving force to the workpiece to move the workpiece along the direction of travel B (FIG. 3) while the workpiece is being cut by the cutting blade 74 of the saw 22. The use of the feed mechanism 26 minimizes proximity of the user to the cutting apparatus 10 while the workpiece is being cut. As such, the cutting apparatus 10 is configured to be self-feeding to decrease risk of exposure of the user to the rotating cutting blade 74.

Although the invention has been described in detail with reference to certain preferred embodiments, variations and modifications exist within the scope and spirit of one or more independent aspects of the invention as described. Various features and advantages of the invention are set forth in the following claims.

## Claims

1. A cutting apparatus for cutting a workpiece, the cutting apparatus comprising:
a first housing portion and a second housing portion;
a saw supported by the first housing portion;
a feed mechanism supported by the second housing portion; and
a height adjustment mechanism for adjusting a distance between the first housing portion and the second housing portion whereby the height adjustment mechanism positions the feed mechanism relative to the first housing portion,
wherein the feed mechanism is operable to move the workpiece through the apparatus to be cut by the saw.

2. The cutting apparatus of claim 1, wherein the feed mechanism includes a motor, a drive system coupled to the motor, and rollers driven by the drive system for feeding the workpiece through the apparatus.

3. The cutting apparatus of claim 2, wherein the rollers are positioned on a rod supported by the second housing portion, and wherein the rod is coupled to an output of the motor via at least one pulley for rotation of the rollers on the workpiece, and/or
wherein the height adjustment mechanism is operable to adjust the distance between the first and second housing portions, thereby positioning the rollers on the workpiece such that the rollers provide a driving force to the workpiece.

4. The cutting apparatus of any preceding claim, further comprising a table positioned between the first housing portion and the second housing portion, wherein a cutting blade of the saw extends through an opening defined by the table.

5. The cutting apparatus of claim 4, wherein the height adjustment mechanism includes at least one threaded bar positioned on the second housing portion, and wherein rotational movement of the at least one threaded bar moves the second housing portion relative to the table.

6. The cutting apparatus of claim 5, wherein the height adjustment mechanism includes a handle coupled to the threaded bar, and wherein the handle is rotated to move the second housing portion, and/or
wherein the second housing portion includes at least one post, and the at least one post is slidably coupled to and supported on the first housing portion for linear movement.

7. The cutting apparatus of any preceding claim, further comprising at least one fence positioned on the first housing portion, wherein the at least one fence is movable relative to the saw to define a cutting width of the apparatus.

8. The cutting apparatus of claim 7, wherein the at least one fence includes a sliding block positioned within a track of the first housing portion, the sliding block movable along the track for adjusting the cutting width, and/or
wherein the at least one fence includes a cam lock for fixing the at least one fence at the cutting width.

9. The cutting apparatus of any preceeding claim, further comprising a width adjustment mechanism including a first fence and a second fence that define a cutting width, the second fence including at least one side including fingers extending at an angle relative to a direction of travel of the workpiece, and/or
the cutting apparatus further comprising a direction of travel defined by the movement of the workpiece from a first end of the apparatus to a second end opposite the first end, and wherein the feed mechanism is operable to move the workpiece along the direction of travel.

10. The cutting apparatus of any preceding claim, wherein the feed mechanism includes a motor for driving the feed mechanism and the saw includes a motor for driving the saw, and wherein at least the motor of the feed mechanism includes a variable speed motor.

11. The cutting apparatus of claim 10, further comprising a single actuator operatively coupled to the saw motor and the motor of the feed mechanism for operating the saw and the feed mechanism together.

12. A cutting apparatus for cutting a workpiece, the cutting apparatus comprising:
a first housing portion and a second housing portion;
a table supported by the first housing portion;
a cutting blade positioned within the first housing portion, wherein the cutting blade extends through an opening defined by the table; and
a feed mechanism supported by the second housing portion and including,
a motor
a drive system coupled to the motor, and
rollers driven by the drive system,
wherein the feed mechanism is operable to move the workpiece through the apparatus to be cut by the cutting blade.

13. The cutting apparatus of claim 12, wherein the feed mechanism includes a rod supported by the second housing portion, wherein the rollers are positioned on the rod, and wherein the rod is coupled to an output of the motor via at least one pulley for rotation of the rollers on the workpiece, and/or
the cutting apparatus further comprising a width adjustment mechanism including at least one fence positioned on the table, wherein the at least one fence is movable relative to the cutting blade for adjusting a cutting width of the apparatus.

14. A cutting apparatus for cutting a workpiece, the cutting apparatus comprising:
a first housing portion and a second housing portion, the second housing portion spaced apart from the first housing portion to define a gap therebetween, the gap having a distance;
a table supported by the first housing portion;
a cutting blade supported by the first housing portion, wherein a portion of the cutting blade extends through an opening defined by the table and is positioned in the gap;
a feed mechanism supported by the second housing portion and including,
a motor
a drive system coupled to the motor, and
rollers driven by the drive system; and
a height adjustment mechanism for adjusting the distance between the first housing portion and the second housing portion,
wherein the height adjustment mechanism is adjustable to a thickness of the workpiece positioned on the table, and
wherein the feed mechanism is operable to move the workpiece through the apparatus to be cut by the cutting blade.

15. The cutting apparatus of claim 14, wherein the height adjustment mechanism is operable to adjust the distance of the gap to any thickness of the workpiece and positions the rollers on the workpiece such that the rollers provide a driving force to the workpiece for movement through the apparatus.
